# EUROPEAN PATENT APPLICATION

(11) **EP 4 492 356 A1**
(43) Date of publication of application: **15.01.2025**
(21) Application number: 24180366.7
(22) Date of filing: 06.06.2024
(51) Int. Cl.: G08G 1/00

(54) **SYSTEM AND METHOD FOR POSITION ESTIMATION AND DIRECTION RECOGNITION BETWEEN OBJECTS THROUGH C-ITS LINKAGE IN V2X COMMUNICATION ENVIRONMENT**

(30) Priority: 11.07.2023 KR 20230090066
(71) Applicant: Korea Electronics Technology Institute, Bundang-gu, Seongnam-si Gyeonggi-do 13509 (KR)
(72) Inventor: JANG, Seonghyun, 16707 Yongin-si, Gyeonggi-do (KR); YOON, Sang-Hun, 13589 Seongnam-si, Gyeonggi-do (KR); AN, Byoungman, 13587 Seongnam-si, Gyeonggi-do (KR); LIM, Ki Taeg, 16707 Suwon-si, Gyeonggi-do (KR); SHIN, Dae Kyo, 13567 Seongnam-si, Gyeonggi-do (KR); JANG, Soohyun, 16825 Yongin-si, Gyeonggi-do (KR); JANG, Jun Hyeok, 16002 Uiwang-si, Gyeonggi-do (KR)
(74) Representative: Isarpatent

(57) **Abstract**

Provided are a system and a method for position estimation and direction recognition between objects through a C-ITS linkage in a V2X communication environment. The system for position estimation and direction recognition between objects through a C-ITS linkage in a V2X communication environment includes an infrastructure information reception unit configured to receive infrastructure information from an infrastructure, an object position determination unit configured to determine a position of equipment in use, an object position and path prediction unit configured to predict a future position and a movement path of the equipment in use, an object information transmission/reception unit configured to exchange information on the equipment with another object, and an object and surrounding situation recognition and determination unit configured to recognize an object and a surrounding situation and determine whether a dangerous situation exists by using information acquired through a C-ITS linkage in a V2X communication environment.

## Description

This application claims priority to and the benefit of Korean Patent Application No. 10-2023-0090066, July 11, 2023, the disclosure of which is incorporated herein by reference in its entirety.

### BACKGROUND

### 1. Technical Field

The present disclosure relates to a system and a method for position estimation and direction recognition between objects through a C-ITS linkage in a V2X communication environment.

### 2. Related Art

According to the related art, there are technical/industrial limitations when objects estimate mutual positions and recognize movement directions, and for example, there are technical limitations in supporting machine to machine (M2M), so communication between equipment needs to be performed through a base station. Although technologies such as WAVE, LTE-V2X, and 5G Uu have developed, there are limitations that make it difficult to provide various services due to issues such as a plurality of terminals, latency time, and transmission capacity.

According to the related art, a technology has been proposed to convert a motion change rate of an object and a change rate of the number of objects that can be measured based on a position change rate and motion information of an object into energy information, to measure the entropy of the converted energy information, and to recognize a situation within a space where an image has been captured by linking a change rate of the entropy with risk policy (Korean Patent Application Laid-Open No. 10-2013-0136251). Furthermore, a technology has been proposed to acquire an image of a region of interest in order to share object sensing information of an infrastructure sensor, to extract an object from the image of a region of interest, to acquire positioning information on the object by using absolute coordinates of the object, and then to transmit the information on the object (Korean Patent No. 10-2315703). Although technologies of estimating and determining the position of an object in various ways have been proposed, the technologies are limited to a specific range, or have limitations that make it difficult to ascertain the speed of an object, the type of the object, the real-time movement path, and the like of the object.

### SUMMARY

Various embodiments are directed to a system and a method for position estimation and direction recognition between objects, which can estimate mutual positions of objects and recognize mutual directions of the objects through a C-ITS linkage in a V2X (V2V, V2I, V2P, V2C, and the like) environment to reduce recently increasing vehicle and human casualty accidents in a traffic environment, and establish a safe autonomous driving environment by determining the exact positions of objects in advance in an environment where autonomous vehicles, regular vehicles, connected vehicles, and the like are mixed.

The present disclosure relates to a system and a method for position estimation and direction recognition between objects through a C-ITS linkage in a V2X communication environment.

A system for position estimation and direction recognition between objects through a C-ITS linkage in a V2X communication environment according to the present disclosure includes an infrastructure information reception unit configured to receive infrastructure information from an infrastructure, an object position determination unit configured to determine a position of equipment in use, an object position and path prediction unit configured to predict a future position and a movement path of the equipment in use, an object information transmission/reception unit configured to exchange information on the equipment with another object, and an object and surrounding situation recognition and determination unit configured to recognize an object and a surrounding situation and determine whether a dangerous situation exists by using information acquired through a C-ITS linkage in a V2X communication environment.

The object position determination unit determines the position of the equipment in use by using at least one of GPS, IMU, and UWB positioning devices.

When a result obtained by comparing a reception information latency time with a reference time is determined to be a valid value, the object and surrounding situation recognition and determination unit determines whether the dangerous situation exists by using the acquired information.

The system for position estimation and direction recognition between objects through a C-ITS linkage in a V2X communication environment according to the present disclosure further includes an object and infrastructure information display unit configured to display object and infrastructure information by using a determination result regarding whether the dangerous situation exists.

The object and infrastructure information display unit displays information on a position, a type, a current separation distance, a speed, an expected behavior, and a separation distance after the expected behavior of a surrounding object.

A method for position estimation and direction recognition between objects through a C-ITS linkage in a V2X communication environment according to the present disclosure includes (a) determining, by a first object and a second object, positions and movement paths of the first object and the second object, and generating information on future expected positions and expected movement paths of the first object and the second object, (b) exchanging, by the first object and the second object, information on the expected positions and the expected movement paths with each other, (c) confirming reception information latency times of the first object and the second object, and recognizing and determining a surrounding situation to decide whether a dangerous situation exists when the reception information latency times are determined to be valid values, and (d) displaying object and infrastructure information according to a decision result regarding whether the dangerous situation exists.

In (c) of confirming, time synchronization between the first object and the second object is performed, and whether the reception information latency times are valid values is determined according to a result obtained by comparing the reception information latency times with a reference time set by a manufacturer or an administrator for each equipment.

The present disclosure can respond to a dangerous situation by recognizing and determining positions, movement paths, and infrastructure information between objects in advance.

According to the present disclosure, safe and smooth movement is possible in preparation for dangerous situations in a mixed environment of autonomous vehicles, connected vehicles, general vehicles, pedestrians, and infrastructure.

The effects of the present disclosure are not limited to the above-mentioned effects, and the other effects which are not mentioned herein will be clearly understood from the following descriptions by those skilled in the art.

### BRIEF DESCRIPTION OF THE DRAWINGS

FIG. 1 illustrates a system for position estimation and direction recognition between objects through a C-ITS linkage in a V2X communication environment according to an embodiment of the present disclosure.
FIG. 2 illustrates a method for position estimation and direction recognition between objects through a C-ITS linkage in a V2X communication environment according to an embodiment of the present disclosure.
FIG. 3 illustrates the display of object and infrastructure information according to an embodiment of the present disclosure.
FIG. 4 is a block diagram illustrating a computer system for implementing a method according to an embodiment of the present disclosure.

### DETAILED DESCRIPTION

The above-described object, other objects, advantages, and characteristics of the present disclosure and a method for achieving them will become apparent from embodiments to be described in detail below together with the accompanying drawings.

However, the present disclosure is not limited to the embodiments to be disclosed below, but may be implemented in various forms different from each other, and the following embodiments are merely provided to easily inform those skilled in the art in the art to which the present disclosure pertains of the object, configuration, and effect of the present disclosure. Therefore, the scope of the present disclosure is defined by the claims.

Terms used in the present specification are used for describing embodiments and are not intended to limit the present disclosure. In this specification, an expression of the singular number includes an expression of the plural number unless clearly defined otherwise in the context. The term "comprises" and/or "comprising" used in this specification does not exclude the presence or addition of one or more other elements, steps, operations, and/or elements in addition to a mentioned element, step, operation, and/or element.

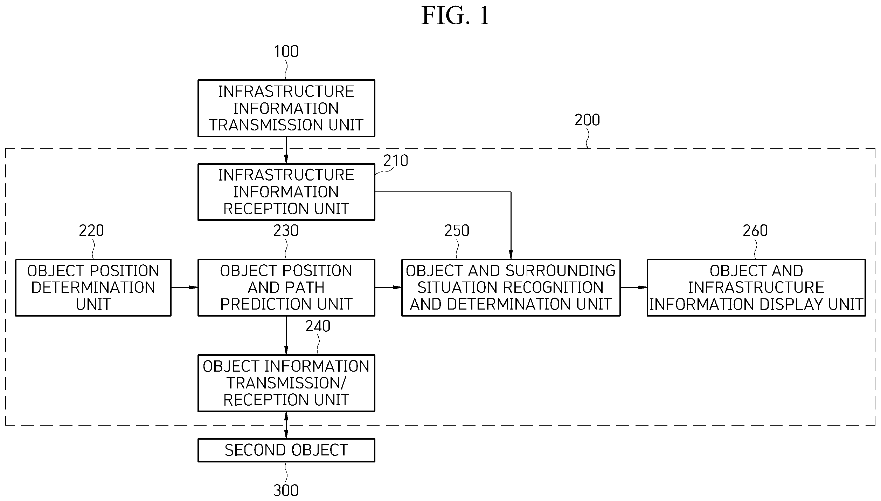

FIG. 1 illustrates a system for position estimation and direction recognition between objects through a C-ITS linkage in a V2X communication environment according to an embodiment of the present disclosure. The V2X communication environment is not limited to WAVE, LTE, 5G-Uu, 5G-NR-V2X, 6G, and the like, and includes all communication environments used in V2X. With the development of communication technologies such as 5G-NR-V2X, technical limitations in the related art have been continuously improved, so that real-time low-latency transmission and reception of high-capacity transmission data becomes possible. An embodiment of the present disclosure proposes, in consideration of new technology trends, a system and a method for position estimation and direction recognition between objects through a C-ITS linkage in a V2X communication environment by using communication technologies between vehicle to vehicle (V2V), vehicle to infra (V2I), and vehicle to pedestrian (V2P) in a communication environment such as 5G-Uu and 5G-NR-V2X. Specifically, an embodiment of the present disclosure proposes 1) Technology for ascertaining the position of communication equipment, 2) Technology for ascertaining the movement direction and expected movement path and time of communication equipment, 3) Technology for transmitting and receiving mutual positions, movement directions, and expected movement paths and times of communication equipment, 4) Technology for estimating mutual positions of communication equipment and receiving and recognizing direction and infrastructure information, and 5) Technology for displaying information on the positions, movement paths, and infrastructure of communication equipment.

An infrastructure information transmission unit 100 transmits infrastructure information including signal information and unexpected situation information. A first object 200 includes an infrastructure information reception unit 210, an object position determination unit 220, an object position and path prediction unit 230, an object information transmission/reception unit 240, and an object and surrounding situation recognition and determination unit 250, and an object and infrastructure information display unit 260.

The object position determination unit 220 determines the position of corresponding equipment being used by a user. The object position and path prediction unit 230 predicts the position and path of the equipment being used by the user. The object position and path prediction unit 230 determines the position of the equipment in use by using a positioning device such as GPS, IMU, and UWB. The object position and path prediction unit 230 determines the predicted path in consideration of the position, movement direction, speed, and the like of the equipment in use, and transmits/receives the determined information between objects (that is, the first object 200 and a second object300) through a C-ITS linkage in a V2X communication environment to ascertain mutual position information. The object information transmission/reception unit 240 communicates with an object information transmission/reception unit of the second object 300, thereby transmitting information on the first object 200 and receiving information on the second object 300. The object and surrounding situation recognition and determination unit 250 recognizes the object and surrounding situation and determines whether a dangerous situation exists by using infrastructure information received through the infrastructure information reception unit 210 and object position and path prediction information. The object and infrastructure information display unit 260 displays information on a user, surrounding objects, and infrastructure.

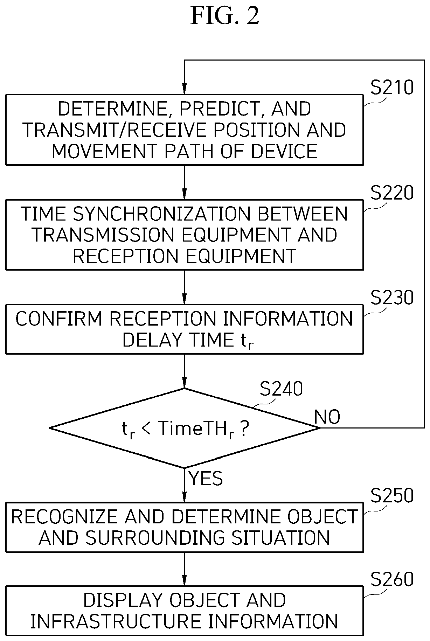

FIG. 2 illustrates a method for position estimation and direction recognition between objects through a C-ITS linkage in a V2X communication environment according to an embodiment of the present disclosure.

In step S210, the method determines the position and movement path of a device, predicts the future position and movement path, and exchanges the prediction information with surrounding objects.

In step S220, the method performs time synchronization between transmission equipment and reception equipment when it is confirmed that surrounding object information and infrastructure information are being received.

In step S230, the method confirms a reception information latency time tᵣ, and in step S240, the method confirms whether the reception information latency time tᵣ is less than a reference time TimeTHᵣ. That is, in relation to time latency information between the transmission equipment and the reception equipment, the time between equipments is confirmed using a network time protocol (NTP) or the like and used when determined to be a valid value. In such a case, the definition of a valid value is set for each equipment at the discretion of a manufacturer or an administrator (user).

When it is confirmed in step S240 that the reception information latency time tᵣ is equal to or greater than the reference time TimeTHᵣ, the procedure returns to step S210. When it is confirmed in step S240 that the reception information latency time tᵣ is less than the reference time TimeTHᵣ, the method performs recognition and determination on the object and surrounding situation in step S250. In step S260, the method displays the object and infrastructure information. Based on the object information transmitted and received between the objects, a user recognizes and determines the current position, movement path, surrounding objects, and surrounding infrastructure situations.

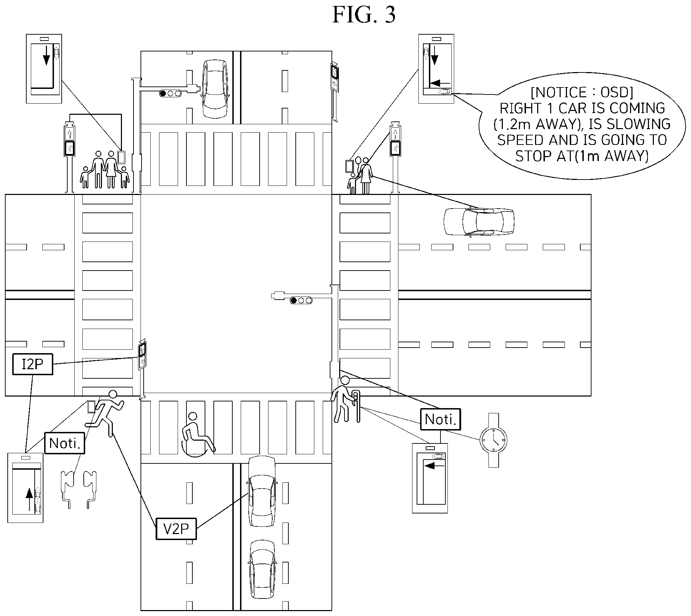

FIG. 3 illustrates the display of object and infrastructure information according to an embodiment of the present disclosure.

According to an embodiment of the present disclosure, the situation of each device is considered. For example, since certain expensive equipment can use a neural processing unit (NPU), AI processing can be performed. In addition, since TOPS that can be processed is different depending on the specifications of the NPU, differences may exist in an amount that can be determined, a real-time property, and the degree of accuracy. When information is determined in consideration of such a situation, a manufacturer or an administrator (user) recognizes the presence and absence of the NPU, the TOPS performance of the NPU, and the like, and finally determines object information.

The object and infrastructure information can be displayed as illustrated in FIG. 3 in which pedestrians can determine vehicle information in real-time and confirm the direction, information, speed, and the like of surrounding vehicles in real-time, thereby constructing a safe environment for both the pedestrians and the vehicles in an autonomous road environment.

According to an embodiment of the present disclosure, information on a position, a type, a current separation distance, a speed, an expected behavior, and a separation distance after the expected behavior of a surrounding object is displayed.

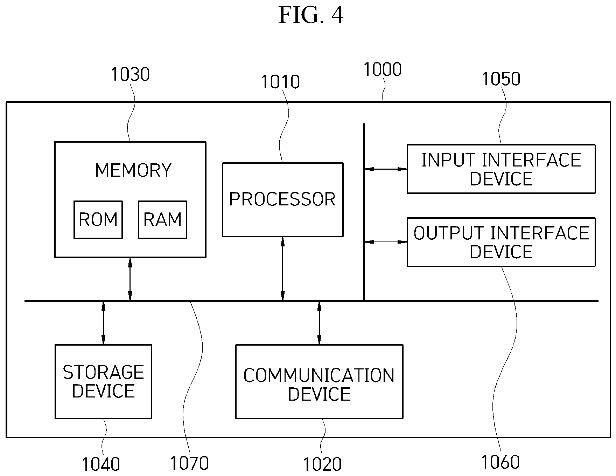

FIG. 4 is a block diagram showing a computer system for implementing a method according to an embodiment of the present disclosure.

Referring to FIG. 4, a computer system 1000 may include at least one of a processor 1010, a memory 1030, an input interface device 1050, an output interface device 1060, and a storage device 1040 that communicate with one another through a bus 1070. The computer system 1000 may also include a communication device 1020 coupled to a network. The processor 1010 may be a central processing unit (CPU) or a semiconductor device that executes instructions stored in the memory 1030 or the storage device 1040. The memory 1030 and the storage device 1040 may include various types of volatile or nonvolatile storage media. For example, the memory may include a read only memory (ROM) and a random access memory (RAM). In an embodiment of the present disclosure, the memory may be located inside or outside the processor, and may be connected to the processor through various known means. The memory is various forms of volatile or nonvolatile storage media, and for example, may include a read-only memory (ROM) or a random access memory (RAM).

Accordingly, an embodiment of the present disclosure may be implemented as a computer-implemented method or a non-transitory computer-readable medium storing computer-executable instructions. In an embodiment, when executed by a processor, computer readable instructions may perform a method according to at least one aspect of the present disclosure.

The communication device 1020 can transmit or receive wired signals or wireless signals.

The method according to an embodiment of the present disclosure may be implemented in the form of program instructions that can be executed through various computer means, and recorded on a computer-readable medium.

The computer-readable medium may include program instructions, data files, data structures, and the like singly or in combination. The program instructions recorded on the computer-readable medium may be specially designed and configured for an embodiment of the present disclosure, or may be known to and usable by those skilled in the art of computer software. A computer-readable recording medium may include a hardware device configured to store and execute program instructions. Examples of the computer-readable recording medium may include magnetic media such as hard disks, floppy disks, and magnetic tapes, optical media such as CD-ROMs and DVDs, and magneto-optical media such as floptical disks, a ROM, a RAM, and a flash memory. The program instructions may include not only machine language code such as that generated by a compiler, but also high-level language code that can be executed by a computer through an interpreter or the like.

Although the embodiments of the present invention have been described in detail above, the scope of the present invention is not limited thereto, and various modifications and improvements made by those skilled in the art using the basic concept of the present invention defined in the following claims are included in the scope of the present disclosure.

## Claims

1. A system for position estimation and direction recognition between objects through a C-ITS linkage in a V2X communication environment, comprising:
an infrastructure information reception unit configured to receive infrastructure information from an infrastructure;
an object position determination unit configured to determine a position of equipment in use;
an object position and path prediction unit configured to predict a future position and a movement path of the equipment in use;
an object information transmission/reception unit configured to exchange information on the equipment with another object; and
an object and surrounding situation recognition and determination unit configured to recognize an object and a surrounding situation and determine whether a dangerous situation exists by using information acquired through a C-ITS linkage in a V2X communication environment.

2. The system for position estimation and direction recognition between objects through a C-ITS linkage in a V2X communication environment of claim 1, wherein the object position determination unit determines the position of the equipment in use by using at least one of GPS, IMU, and UWB positioning devices.

3. The system for position estimation and direction recognition between objects through a C-ITS linkage in a V2X communication environment of claim 1, wherein, when a result obtained by comparing a reception information latency time with a reference time is determined to be a valid value, the object and surrounding situation recognition and determination unit determines whether the dangerous situation exists by using the acquired information.

4. The system for position estimation and direction recognition between objects through a C-ITS linkage in a V2X communication environment of claim 1, further comprising:
an object and infrastructure information display unit configured to display object and infrastructure information by using a determination result regarding whether the dangerous situation exists.

5. The system for position estimation and direction recognition between objects through a C-ITS linkage in a V2X communication environment of claim 4, wherein the object and infrastructure information display unit displays information on a position, a type, a current separation distance, a speed, an expected behavior, and a separation distance after the expected behavior of a surrounding object.

6. A method for position estimation and direction recognition between objects through a C-ITS linkage in a V2X communication environment, comprising:
(a) determining, by a first object and a second object, positions and movement paths of the first object and the second object, and generating information on future expected positions and expected movement paths of the first object and the second object;
(b) exchanging, by the first object and the second object, information on the expected positions and the expected movement paths with each other;
(c) confirming reception information latency times of the first object and the second object, and recognizing and determining a surrounding situation to decide whether a dangerous situation exists when the reception information latency times are determined to be valid values; and
(d) displaying object and infrastructure information according to a decision result regarding whether the dangerous situation exists.

7. The method for position estimation and direction recognition between objects through a C-ITS linkage in a V2X communication environment of claim 6, wherein in (c) of confirming, time synchronization between the first object and the second object is performed, and whether the reception information latency times are valid values is determined according to a result obtained by comparing the reception information latency times with a reference time set by a manufacturer or an administrator for each equipment.
